# DEMANDE DE BREVET EUROPEEN

(11) **EP 1 845 118 A1**
(43) Date de publication de la demande: **17.10.2007**
(21) Numéro de dépôt: 07006230.2
(22) Date de dépôt: 27.03.2007
(51) Int. Cl.: C08F 36/04, C08F 4/54, C08F 4/52

(54) **Procédé de préparation d'un élastomère diénique, tel qu'un polybutadiene**

(30) Priorité: 14.04.2006 FR 0603594
(71) Demandeur: Société de Technologie Michelin, 63000 Clermont-Ferrand (FR); Michelin Recherche et Technique S.A., 1763 Granges-Paccot (CH)
(72) Inventeur: Robert, Pierre, 63000 Clermont-Ferrand (FR)
(74) Mandataire: Hiebel, Robert

(57) **Abrégé**

La présente invention concerne un procédé de préparation d'un élastomère diénique, tel qu'un homopolymère ou un copolymère du butadiène. L'invention s'applique notamment à l'obtention d'un polybutadiène à taux élevé d'enchaînements cis-1,4 présentant à la fois une viscosité Mooney égale ou supérieure à 40 et un indice de polydispersité inférieur à 2,1.

Le procédé selon l'invention comprend une réaction d'un système catalytique avec au moins un monomère diène conjugué à polymériser et le système catalytique est à base d'au moins:
- optionnellement un diène conjugué de préformation,
- un sel d'un ou plusieurs métaux de terre(s) rare(s), tel qu'un sel d'un acide carboxylique ou d'un acide phosphorique organique,
- un solvant hydrocarboné inerte,
- un agent d'alkylation comprenant un dérivé allylique de l'aluminium de formule R"ₙA1R'₃₋ₙ, où R' est un groupe alkyle saturé ou non ou bien un hydrure, où R" est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

## Description

La présente invention concerne un procédé de préparation d'un élastomère diénique, tel qu'un homopolymère ou un copolymère du butadiène. L'invention s'applique notamment à l'obtention d'un polybutadiène à taux élevé d'enchaînements cis-1,4 présentant à la fois une viscosité Mooney égale ou supérieure à 40 et un indice de polydispersité réduit.

Pour la préparation d'homopolymères ou de copolymères du butadiène présentant un taux élevé d'enchaînements cis-1,4, il est connu d'utiliser des systèmes catalytiques à base :
- d'un sel de terre(s) rare en solution dans un solvant hydrocarboné,
- d'un agent d'alkylation de ce sel constitué d'un alkylaluminium, et
- d'un halogénure d'un alkylaluminium.

Le document de brevet EP-B-207 558 enseigne, pour l'obtention d'un homopolymère ou d'un copolymère du butadiène présentant une viscosité Mooney sensiblement indépendante du taux de conversion des monomères :
- d'initier la réaction de polymérisation avec un système catalytique comprenant :
   a) un composé de néodyme choisi parmi l'oxyde de néodyme, les alcoolates, phénates et carboxylates de néodymes,
   b) un composé organique à groupe hydroxyle ou carboxyle,
   c) un composé organométallique non halogéné de l'aluminium, et
   d) un composé halogéné choisi parmi les halogénures d'alkyles secondaires ou tertiaires, les halogénures d'acides organiques, les halogénures métalliques et organométalliques, les acides halogéno-hydriques et les halogènes,
   de telle sorte que le rapport molaire (aluminium/ néodyme) dans ce système catalytique varie de 10 à 30 ; et
- d'ajouter d'une manière continue ou discontinue, après le début de la réaction de polymérisation et pendant un laps de temps au moins égal à la moitié de la durée totale de cette réaction, une quantité donnée de ce composé c) jusqu'à l'obtention d'un rapport molaire (aluminium/ néodyme) allant de 20 à 80.

Comme indiqué dans les exemples de réalisation de ce document, la finalité de cet ajout du composé organoaluminium postérieurement à l'initiation de la réaction de polymérisation est l'obtention de viscosités Mooney ML(1+4) qui sont toujours nettement inférieures à 40, en comparaison des viscosités Mooney qui sont obtenues en ajoutant ce composé en même temps que le système catalytique, ce qui ne rend pas ces polybutadiènes bien adaptés pour être utilisés dans des bandes de roulement d'enveloppe de pneumatique.

Les documents de brevet WO-A-02/38636 et WO-A-03/097708 au nom des Demanderesses enseignent, pour l'obtention de polybutadiènes, d'utiliser un système catalytique de type « préformé » à base d'au moins :
- un diène conjugué de préformation, tel que le butadiène,
- un sel d'un ou de plusieurs métaux de terre(s) rare(s) d'un acide phosphorique organique, qui est en suspension dans au moins un solvant hydrocarboné inerte, saturé et de type aliphatique ou alicyclique,
- un agent d'alkylation constitué d'un alkylaluminium de formule AlR₃ ou HAlR₂, et
- un donneur d'halogène qui appartient à la famille des halogénures d'alkylaluminium à l'exclusion des sesquihalogénures d'alkylaluminium.

Les polybutadiènes obtenus au moyen de ce système catalytique présentent notamment un indice de polydispersité inférieur à 2,1 et une viscosité Mooney ML(1+4) à 100° C égale ou supérieure à 40. Ces caractéristiques combinées rendent ces polybutadiènes bien adaptés pour être utilisés dans des bandes de roulement d'enveloppe de pneumatique.

Dans le cadre de recherches ayant pour but d'adapter les procédés de polymérisation aux élastomères diéniques à obtenir et aux conditions de polymérisation rencontrées, les Demanderesses ont découvert d'une manière inattendue que l'utilisation à titre d'agent alkylant de dérivés allyliques d'alkylaluminium permet un excellent contrôle de la distribution des masses moléculaires et permet d'obtenir des élastomères diéniques à fort taux d'enchaînements cis-1,4, tels que des homo- ou copolymères du butadiène, qui présentent notamment une viscosité Mooney ML(1+4) à 100° C prédéterminée égale ou supérieure à 40 et un indice de polydispersité Ip égal ou inférieur à 2,1.

Selon l'invention, ce système catalytique spécifique est à base d'au moins :
- optionnellement un diène conjugué de préformation,
- un sel d'un ou plusieurs métaux de terre(s) rare(s), tel qu'un sel d'un acide carboxylique ou d'un acide phosphorique organique,
- un solvant hydrocarboné inerte,
- un agent d'alkylation spécifique comprenant un dérivé allylique de l'aluminium de formule R"ₙAlR'₃₋ₙ, où R' est un groupe alkyle saturé ou non ou bien un hydrure, où R" est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

On notera que ces caractéristiques combinées de fort taux d'enchaînements cis-1,4, de viscosité Mooney suffisamment élevée et de distribution de masse moléculaire contrôlée (se traduisant par un indice Ip réduit ≤ 2,1) rendent les élastomères diéniques ainsi obtenus particulièrement bien adaptés pour être utilisés dans des bandes de roulement d'enveloppe de pneumatique.

Bien entendu, par l'expression « à base de » utilisée pour définir les constituants du système catalytique, on entend le produit ou les produits de réaction préformé(s) de ces constituants incluant alors à titre optionnel ce diène conjugué de préformation, ou le produit ou les produits de la réaction *in situ* de ces constituants ou le système catalytique résultant du prémélangeage des constituants.

A titre de diène conjugué de préformation utilisable pour préformer le système catalytique selon l'invention, on peut citer le 1, 3-butadiène, à titre préférentiel.

On peut également citer le 2-méthyl 1, 3-butadiène (ou isoprène), les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène, ou tout autre diène conjugué ayant entre 4 et 8 atomes de carbone.

On notera que le rapport molaire [diène conjugué de préformation / sel de terre(s) rare(s)] peut présenter une valeur allant de 10 à 70.

A titre de sel de terre(s) rare(s) utilisable dans ce système catalytique selon l'invention, on peut avantageusement utiliser :
- dans un premier cas : un sel de terre(s) rare(s) d'un acide carboxylique, tel qu'un carboxylate de néodyme et par exemple le tris(2-éthyl hexanoate) de néodyme, le naphténate de néodyme ou le versatate de néodyme, ou bien
- dans un second cas : un sel de terre(s) rare(s) d'un acide phosphorique.

Ce sel de terre(s) rare(s) peut être utilisé sous forme d'une solution plus ou moins visqueuse et qui peut comporter de l'acide libre ou de l'eau résiduelle en fonction des conditions de préparation par ailleurs connues en soi.

Le sel de terre(s) rare(s) peut être préparé soit en continu, soit en discontinu comme décrit dans le document de brevet WO-A-02/38636. Lorsque le sel d'un ou plusieurs métaux de terre(s) rare(s) se présente sous la forme d'une poudre non hygroscopique, le temps de solubilisation dans le solvant est variable en fonction des conditions de solubilisation utilisées.

Ainsi, selon un premier mode de réalisation, le sel de terre(s) rare(s) se présentant sous forme d'une poudre non hygroscopique ayant une légère tendance à s'agglomérer à la température ambiante est mis en solution dans un solvant hydrocarboné, inerte, aliphatique ou alicyclique de bas poids moléculaire, tel que le cyclohexane, le méthylcyclohexane, l'hexane pur ou sous forme de coupe de solvants aliphatique et alicyclique de point d'ébullition allant de 65°C à 72°C, le n-heptane, ou un mélange de ces solvants. A titre préférentiel, on utilise le méthylcyclohexane à titre de solvant hydrocarboné inerte.

Selon un autre mode de réalisation préférentiel, comme par exemple décrit dans le document de brevet WO-A-00/64 910, le sel de terre(s) rare(s) mis à réagir est synthétisé « in situ » directement dans le solvant, c'est-à-dire que la réaction du dérivé de l'acide phosphorique avec le composé de métal de terre(s) rare(s) est réalisée en présence dudit solvant pour former le sel de terre(s) rare(s) dans ledit solvant, ledit sel se présentant sous forme d'une solution plus ou moins visqueuse qui contient le composé de la formule Nd(P)₃.x PH, dans laquelle x est un nombre, entier ou non, égal ou supérieur à 0, et PH représente un acide libre qui est un diester de l'acide phosphorique de formule [(RO)₂ (HO)P = 0] résultant de la synthèse « in situ ».

Selon un autre mode de réalisation, la solution de métal de terre(s) rare(s) préparée selon le premier mode de réalisation peut contenir de l'acide libre de formule (RO)₂(HO)P = 0 qui est ajouté pendant ou postérieurement à la solubilisation du sel à l'état de poudre.

A titre de sels dudit ou desdits métaux de terre(s) rare(s) utilisables dans le procédé conforme à l'invention, on peut citer à titre préférentiel des organophosphates du néodyme, du cerium, du didyme et préférentiellement le tris [ditbutyl phosphate] de néodyme, le tris [dipentyl phosphate] de néodyme, le tris [dioctyl phosphate] de néodyme, le tris [bis (2-éthylhexyl) phosphate] de néodyme, le tris [bis (1-méthylheptyl) phosphate] de néodyme, le tris [bis (p-nonylphenyl) phosphate] de néodyme, le tris [butyl (2-éthylhexyl) phosphate] de néodyme, le tris [(1-méthylheptyl) (2-éthylhexyl) phosphate] de néodyme, le tris [(2-éthylhexyl) (p-nonylphényl) phosphate] de néodyme, le tris [bis (2-éthylhexyl) phosphate] de néodyme. On peut également utiliser, à titre de sel, un mélange de plusieurs sels d'un acide phosphorique organique d'un métal de terre(s) rare(s).

Selon un exemple préférentiel commun à ces modes de réalisation, on utilise à titre de sel un tris[bis(2-éthylhexyl)phosphate] dudit ou desdits métaux de terre(s) rare(s). A titre encore plus préférentiel, ledit sel de terre(s) rare(s) est le tris[bis(2-éthylhexyl)phosphate] de néodyme (Nd(P)₃ en abrégé ci-après).

A titre de solvant hydrocarboné inerte utilisable dans le système catalytique selon l'invention, on peut par exemple utiliser un solvant aromatique, tel que le toluène, ou bien un solvant aliphatique ou alicyclique, tel que le n-heptane, le cyclohexane ou le méthylcyclohexane.

A titre de dérivé allylique de l'aluminium, qui est utilisé spécifiquement comme agent d'alkylation dans le système catalytique selon l'invention, on utilise avantageusement un dérivé allylique dans lequel le radical allylique est choisi dans le groupe constitué par les dérivés butadiényle, isoprényle, oligobutadiényle et oligoisoprényle, le nombre d'unités de ces oligomères étant par exemple compris entre 1 et 10, et préférentiellement 5.

Selon une autre caractéristique de l'invention, ledit dérivé allylique de l'aluminium comprend de préférence le produit de la réaction d'un dérivé allylique du lithium de formule R"Li, tel qu'un (oligo)butadiényle lithium ou un (oligo)isoprényle lithium qui est le précurseur du dérivé allylique de l'aluminium, et d'un agent halogénant de formule XₙAlR'₃₋ₙ, où X est un halogène et où R', R" et n sont tels que définis ci-dessus.

Ledit dérivé allylique du lithium de formule R"Li est le produit de la réaction d'un diène conjugué, tel que le 1,3-butadiène ou l'isoprène, et d'un alkyllithium, tel que du sec-butyl lithium, dans un solvant aromatique, aliphatique ou cycloaliphatique, tel que du cyclohexane ou du méthylcyclohexane. Ledit dérivé allylique de lithium pourrait également être obtenu par toute autre méthode de synthèse connue de l'homme de l'art pour l'obtention d'un alkyllithium. On notera que ledit dérivé allylique de lithium R"Li doit être utilisé le plus pur possible, c'est-à-dire, exempt de toute trace d'alkyllithium résiduel, tel que du sec-butyl lithium.

Selon une première forme d'exécution, le dérivé allylique du lithium et l'agent halogénant sont mis à réagir en quantités stoechiométriques.

Selon une autre forme d'exécution préférentielle, ledit donneur d'halogène correspond audit agent halogénant de formule XₙAlR'₃₋ₙ utilisé en excès, lequel a réagi en partie seulement avec ledit dérivé allylique du lithium pour l'obtention dudit dérivé allylique de l'aluminium.

Plus précisément, on fait réagir dans ce cas *h*+*x*/*n* moles dudit agent halogénant XₙAlR'₃₋ₙ pour *nh* moles dudit dérivé allylique du lithium R"Li, avec h ≥ 1, 1 ≤ n ≤ 3 et 1 ≤ x ≤ 4, de telle manière que cet agent halogénant exerce les deux fonctions suivantes :
- une première partie [h moles par rapport au sel de terre(s) rare(s)] réagit avec le dérivé allylique du lithium R"Li pour générer le dérivé allylique de l'aluminium R"ₙAlR'₃₋ₙ selon la réaction : n R"Li + XₙAlR'₃₋ₙ → R"ₙAlR'₃₋ₙ + nLiX , et
- une seconde partie [*x*/*n* moles d'agent halogénant par rapport au sel de terre(s) rare(s)] forme ledit donneur d'halogène pour l'halogénation de ce sel.

Avantageusement, on fait réagir h+3 moles dudit agent halogénant pour h moles dudit dérivé allylique du lithium et pour 1 mole dudit sel de terre(s) rare(s), i.e. x = 3 et n = 1.

On notera toutefois que le dérivé allylique de l'aluminium du système catalytique selon l'invention pourrait être obtenu par toute autre méthode de synthèse connue de l'homme de l'art pour l'obtention d'un alkyl aluminium.

Selon un premier mode de réalisation de l'invention dans lequel ledit système catalytique est spécifiquement formé *in situ,* c'est-à-dire où tous les constituants catalytiques, c'est-à-dire ledit solvant, ledit monomère, ledit sel de terre(s) rare(s), ledit dérivé allylique du lithium, ledit agent halogénant, sont introduits dans le réacteur juste avant polymérisation, ledit agent halogénant est à base de chlore ou de brome, avantageusement un monohalogénure d'aluminium tel qu'un halogénure de diéthylaluminium et préférentiellement le chlorure de diéthylaluminium.

Selon un deuxième mode de réalisation de l'invention dans lequel ledit système catalytique est spécifiquement préformé antérieurement à ladite réaction de polymérisation, c'est-à-dire par mise en contact des différents constituants catalytiques à une température éventuellement supérieure à la température ambiante, par exemple 15 minutes à 60 °C, suivie d'un vieillissement des constituants catalytiques avant la polymérisation, optionnellement en présence dudit diène conjugué de préformation, ledit agent halogénant utilisé pour l'obtention dudit dérivé allylique de l'aluminium est spécifiquement à base de chlore ou de brome, cet agent halogénant étant alors avantageusement un monohalogénure d'aluminium, tel que le bromure de diéthylaluminium.

Selon un troisième mode de réalisation de l'invention dans lequel ledit système catalytique est spécifiquement formé par prémélangeage immédiatement avant ladite réaction de polymérisation, par mise en contact des différents constituants, c'est-à-dire le solvant, le dérivé allylique du lithium, l'agent halogénant en excès, et le sel de terre(s) rare(s), à température ambiante, optionnellement en présence dudit diène conjugué de préformation, ledit agent halogénant est à base de chlore ou de brome, cet agent halogénant étant alors avantageusement un monohalogénure d'aluminium tel qu'un halogénure de diéthylaluminium.

Conformément à l'un ou l'autre de ces trois modes de réalisation de l'invention, ledit système catalytique est de préférence obtenu en mélangeant directement ledit solvant, ledit dérivé allylique du lithium, ledit agent halogénant présent en excès pour l'obtention dudit agent d'alkylation ainsi que ledit donneur d'halogène et ledit sel.

Concernant ledit donneur d'halogène selon l'invention, on notera que l'exclusion des sesquihalogénures d'alkylaluminium est une condition nécessaire pour l'obtention de polybutadiènes présentant à la fois une viscosité Mooney ML(1+4) à 100° C égale ou supérieure à 40 et un indice de polydispersité Ip égal ou inférieur à 2,1.

Selon l'invention, on notera que le rapport molaire [donneur d'halogène / sel de terre(s) rare(s)] peut présenter une valeur allant de 2 à 3,5 et, de préférence, allant de 2,6 à 3.

Selon une autre caractéristique avantageuse de l'invention, le rapport molaire (agent d'alkylation / sel de terre(s) rare(s)) dans ledit système catalytique présente une valeur réduite allant de 1 à 20.

Lorsque ledit rapport est inférieur ou égal à 5, l'activité catalytique est très élevée lorsque le sel de terre(s) rare(s) est un phosphate, la distribution des masses moléculaires est étroite et l'indice Ip inférieur ou égal à 2,1, tandis que lorsque ce rapport est relativement élevé, c'est-à-dire allant de 15 à 20, la distribution des masses moléculaires est très large et l'indice Ip égal ou supérieur à 2,5.

Selon une autre forme d'exécution du procédé conforme à l'invention, on peut introduire, en décalé par rapport au système catalytique utilisé pour la réaction de polymérisation, en continu ou en discontinu, du ou des monomère(s) à polymériser, une quantité supplémentaire prédéterminée d'au moins un composé alkylaluminium de formules AlR₃ ou HAlR₂ ou R"ₙAlR'₃₋ₙ, dans lesquelles R et R' représentent un groupe alkyle saturé ou non, préférentiellement de un à douze atomes de carbone, R" représente un groupe allylique, n un entier inclusivement de 1 à 3 et H représente un atome d'hydrogène dans le réacteur de polymérisation lorsqu'on opère en discontinu ou dans l'unité industrielle de polymérisation lorsqu'elle fonctionne en continu, c'est-à-dire pas en même temps et, par conséquent, soit avant, soit après, soit en partie avant et en partie après, par rapport à l'introduction du système catalytique avantageusement préformé utilisé pour la réaction de polymérisation.

On peut citer à titre d'alkylaluminiums de formule AlR₃ des composés tels que des trialkylaluminiums, par exemple le triisobutylaluminium, à titre d'alkylaluminium de formule HAlR₂, avantageusement l'hydrure de diisobutylaluminium ou un composé d'aluminium qui, avantageusement, est identique à celui utilisé comme agent d'alkylation du système catalytique.

La quantité d'au moins un composé d'alkylaluminium de formules AlR₃ ou HAlR₂ ou R"ₙAlR'₃₋ₙ, où R, R', R" et n sont tels que définis ci-dessus, qui est identique ou non à celui de l'agent d'alkylation dudit système catalytique, ajoutée est variable car fonction de l'un ou plusieurs ou tous les paramètres réactionnels énumérés à titre non limitatif ci-après, notamment du ou des monomère(s) diénique(s) à polymériser ou copolymériser, des conditions de polymérisation, des caractéristiques macrostructurales et/ou microstructurales visées de l'élastomère diénique à obtenir, du niveau fluctuant d'impuretés présentes, en cas de polymérisation en continu, dans l'unité industrielle de polymérisation, notamment dans le solvant de polymérisation, du temps de séjour dans le réacteur de polymérisation.

L'homme du métier ajustera dans une unité industrielle de polymérisation opérant en continu, comme connu en soi, la quantité de composé alkylaluminium à ajouter en décalé par rapport au système catalytique en fonction du ou des paramètre(s) pris en considération.

Selon une forme d'exécution préférentielle de l'invention, l'introduction en décalé dudit composé alkylaluminium est réalisée par l'introduction de la totalité dudit composé alkylaluminium avant l'introduction du système catalytique et, par voie de conséquence, avant la polymérisation du monomère ou des monomères à polymériser ou copolymériser.

Avantageusement, le rapport molaire (composé alkylaluminium ajouté en décalé et avantageusement avant réaction / alkylaluminium dans le système catalytique) varie de 1 : 20 à 10 : 1 et selon une forme d'exécution avantageuse varie de 0,05 à 3 et plus préférentiellement de 0,05 à 1.

On notera en outre que cette utilisation pour le rapport molaire (agent d'alkylation / sel de terre(s) rare(s)) d'une valeur réduite allant de 1 à 10, plus avantageusement de 1 à 5, conjointement à l'ajout préalable dudit composé alkylaluminium, se traduit avantageusement par une quantité totale moindre d'organoaluminium(s), utilisés à la fois dans ledit système catalytique et avant polymérisation, ce qui implique une réduction significative du coût de mise en oeuvre du procédé selon l'invention en comparaison d'un procédé qui utiliserait un système catalytique analogue mais dont le rapport molaire (agent d'alkylation / sel de terre(s) rare(s)) serait plus élevé et qui n'inclurait pas cet ajout préalable du composé organoaluminium.

Selon une autre caractéristique préférentielle de l'invention, la quantité dudit composé alkylaluminium mis en présence avec le(s)dit(s) monomère(s) à polymériser varie de 10 à 5000 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

On notera que la mise en présence en décalé et avantageusement avant polymérisation du ou des monomères à polymériser avec ledit composé alkylaluminium permet, selon l'invention, de moduler avec une bonne flexibilité et à moindre coût l'activité du système catalytique en fonction de la nature du ou des monomères choisis et des caractéristiques de macrostructure de l'élastomère diénique obtenu, telles que sa viscosité Mooney. Il est ainsi possible de faire varier, sur une unité dédiée à la polymérisation de monomères de réactivités respectives différentes et/ou dédiée à l'obtention d'élastomères présentant une large plage de viscosités Mooney ML (1+4) à 100 °C, une distribution étroite de masse moléculaire, c'est-à-dire comprise entre 25 et 100, et présentant des propriétés de fluage à froid tout à fait satisfaisantes pour une utilisation dans des bandes de roulement de pneumatiques, l'activité du système catalytique utilisé et donc le rendement de polymérisation, tout en utilisant une seule et même formule de système catalytique.

On notera également que cet ajout dudit composé alkylaluminium en décalé et avantageusement avant polymérisation permet de régler l'activité du système catalytique en fonction des conditions de polymérisation, telles que la température et/ou le temps de séjour dans le ou chaque réacteur de polymérisation, ce qui peut notamment constituer un gain de productivité en cas de réduction du temps de séjour pour l'obtention d'un élastomère de caractéristiques données.

En d'autres termes, le procédé de polymérisation selon l'invention présente une grande flexibilité d'utilisation en polymérisation continue ou discontinue, du fait qu'il rend l'unique système catalytique utilisé équivalent à une palette de systèmes catalytiques d'activités différentes.

Selon une autre caractéristique de l'invention, ladite réaction de polymérisation peut être mise en oeuvre dans un solvant de polymérisation hydrocarboné inerte, tel que du cyclohexane ou du méthylcyclohexane, ou bien en masse, et à une température allant de préférence de 0 à 100° C.

Avantageusement, on met en oeuvre la réaction de polymérisation en continu, ledit composé alkylaluminium étant introduit en une entrée de ligne située en amont d'au moins un réacteur de polymérisation, puis le sel de terre(s) rare(s) en amont d'au moins un réacteur de polymérisation dans lesquels est (sont) introduit(s) le(s) monomère(s) à polymériser.

On notera que l'introduction en décalé du composé alkylaluminium peut également être effectuée après celle du système catalytique préformé, notamment sur une entrée de ligne du catalyseur, d'une unité de polymérisation opérant en continu, mais avant polymérisation du ou des monomère(s) à polymériser.

Selon une forme d'exécution avantageuse, le précurseur allylique du lithium et l'excès d'agent halogénant sont introduits en entrée de ligne à l'aide d'un mélangeur dynamique de type parfaitement agité, suivi d'une introduction du sel de terre(s) rare(s) à l'aide d'un mélangeur disposant d'une agitation de type statique.

On notera que dans ce cas, et cela d'autant plus que le rapport molaire (agent d'alkylation / sel de terre(s) rare(s)) est plus réduit, l'ajout du composé alkylaluminium avant polymérisation permet de s'affranchir des fluctuations dans le temps des impuretés dues aux solvants de polymérisation qui sont recyclés en entrée de ligne et de ne pas pénaliser, du fait de ces fluctuations, l'activité du système catalytique, de sorte à minimiser la dispersion des caractéristiques de l'élastomère obtenu.

On notera que l'ajout selon l'invention dudit composé alkylaluminium permet également d'obtenir, même en présence de telles impuretés, la reproduction mentionnée ci-dessus du résultat procuré par un système catalytique analogue, mais dont le rapport molaire (agent d'alkylation / sel de terre(s) rare(s)) serait plus élevé.

A titre d'élastomère diénique pouvant être préparé par le procédé selon l'invention, on peut citer tout homopolymère ou copolymère obtenu par homopolymérisation ou copolymérisation d'au moins un monomère diène conjugué ayant de 4 à 12 atomes de carbone, éventuellement avec un composé vinylaromatique.

A titre de monomère(s) diène(s) conjugué(s) conviennent notamment le butadiène-1,3, l'isoprène, les 2,3-di(alkyle en C1 à C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène.

A titre de composés vinylaromatiques conviennent par exemple le styrène, l'ortho-, le méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99 % et 20 % en poids d'unités diéniques et entre 1 % et 80 % en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, micro-séquencés, et ils peuvent être couplés et/ou étoilés avec un agent de couplage et/ou d'étoilage.

De manière particulièrement préférentielle, ledit élastomère diénique est choisi dans le groupe des élastomères diéniques fortement insaturés constitué par les polybutadiènes (BR), les polyisoprènes de synthèse (IR).

On notera que les systèmes catalytiques utilisés dans le procédé selon l'invention permettent notamment d'obtenir des homopolymères du butadiène présentant à la fois une viscosité Mooney ML(1+4) à 100° C, mesurée selon la norme ASTM D 1646, qui est égale ou supérieure à 40, un taux d'enchaînements cis-1,4 (mesuré par la technique « NIR » de dosage par proche infrarouge, voir annexe 1 jointe) qui est supérieur à 90 %, et un indice de polydispersité inférieur à 2,1 (mesuré par la technique de chromatographie d'exclusion par la taille SEC, voir annexe 2 jointe).

Les caractéristiques précitées de la présente invention, ainsi que d'autres, seront mieux comprises à la lecture de la description suivante de plusieurs exemples de réalisation de l'invention, donnés à titre illustratif et non limitatif en relation avec les annexes jointes.

Dans les exemples qui suivent, toutes les manipulations ont été réalisées sous azote en suivant les règles usuelles de la manipulation sous atmosphère inerte.

### A - Exemples de polymérisations du butadiène en discontinu au moyen de systèmes catalytiques selon l'invention, sans mise en présence préalable d'un composé alkylaluminium avec le butadiène à polymériser.

### I. Exemple 1 :

Cet exemple décrit la polymérisation du butadiène essentiellement en cis-1,4 dans le cyclohexane, au moyen d'un premier système catalytique 1, préparé *in situ* selon l'invention de formule :

oligobutadiényle lithié / chlorure de diéthylaluminium / tris(2-éthyl hexanoate) de néodyme, aux rapports molaires 12/15/1.

### 1) Préparation in situ d'un premier système catalytique selon l'invention :

### a) Préparation du dérivé allylique du lithium :

Dans une bouteille Steinie préalablement lavée et séchée et contenant un barreau aimanté, on a introduit sous agitation :
- 100 ml de cyclohexane préalablement passé sur alumine puis barboté à l'azote,
- 15,4 ml de butadiène, et
- 0,037 moles de butyllithium secondaire.

Après agitation pendant une heure à température ambiante, on a obtenu une solution d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Mélange in situ des différents constituants du système catalytique et polymérisation:

Dans une bouteille Steinie de 100 ml, on a introduit :
- 70 g de cyclohexane,
- 10 g de butadiène,
- 300 µmoles de la solution de prépolymère lithié obtenue en a),
- 375 µmoles de chlorure de diéthylaluminum, et
- 25 µmoles de tris(2-éthyl hexanoate) de néodyme.

L'agent d'alkylation et le donneur d'halogène selon l'invention sont ainsi respectivement formés du produit de la réaction de l'oligobutadiényl lithium avec le chlorure de diéthylaluminium et du chlorure de diéthylaluminium.

On a ensuite agité la bouteille pendant une heure à 60° C. On a ainsi obtenu 9,6 g de polybutadiène, par coagulation dans le méthanol. Puis on a stabilisé ce polymère par ajout de 100 mg de para-éthyle ortho-ditertiobutyle phénol.

Ce polybutadiène présentait les caractéristiques suivantes :
- viscosité intrinsèque : 1,35 dl/g ;
- masse moléculaire moyenne en nombre : Mn = 68 000 g/mol,
- masse moléculaire moyenne en poids : Mw = 110 000 g/mol,
- indice de polydispersité : Ip = 1,7, et
- taux d'enchaînements cis-1,4 : 93 %.

### II. Exemple 2 :

Cet exemple décrit la polymérisation du butadiène essentiellement en cis-1,4 dans le cyclohexane, au moyen du système catalytique 2, préparé *in situ* et de formule :

oligoisoprényle lithié / chlorure de diéthylaluminium / tris(2-éthyl hexanoate) de néodyme, aux rapports molaires 12/15/1.

Ce deuxième système catalytique se différencie uniquement de celui du § I. ci-dessus en ce que le dérivé allylique du lithium utilisé est un oligoisoprényle lithié, utilisé en lieu et place dudit oligobutadiényle lithié et préparé de la manière décrite au § I. ci-dessus.

Ce système catalytique est préparé *in situ* en introduisant, dans une bouteille Steinie:
- 120 g de cyclohexane,
- 10 g de butadiène,
- 2400 µmoles de la solution d'oligoisoprényle lithié,
- 2600 µmoles de chlorure de diéthylaluminum, et
- 100 µmoles de tris(2-éthyl hexanoate) de néodyme.

L'agent d'alkylation et le donneur d'halogène selon l'invention sont ainsi respectivement formés du produit de la réaction de l'oligoisoprényl lithium avec le chlorure de diéthylaluminium et du chlorure de diéthylaluminium.

On a ensuite agité la bouteille pendant 100 min. à 60° C. On a ainsi obtenu 9 g de polybutadiène présentant les caractéristiques suivantes :
- viscosité intrinsèque : 0,5 dl/g ;
- masse moléculaire moyenne en nombre : Mn = 51 000 g/mol,
- masse moléculaire moyenne en poids : Mw = 72 000 g/mol,
- indice de polydispersité : Ip = 1,4, et
- taux d'enchaînements cis-1,4 : 94 %.

### III. Exemples 3 et 4 :

On a fait varier, en suivant le protocole expérimental décrit au § I. ci-dessus, les quantités relatives de butadiène et de butyllithium pour obtenir deux dérivés allyliques du lithium, correspondant respectivement à 1 motif et 10 motifs butadiényle pour les systèmes catalytiques 3 et 4 selon l'invention, tous deux préparés *in situ* et de formule :

(butadiényle)_{n =1 ou 10} lithium / chlorure de diéthylaluminium / tris(2-éthyl hexanoate) de néodyme, aux rapports molaires 12/15/1.

L'agent d'alkylation et le donneur d'halogène selon l'invention sont ainsi respectivement formés du produit de la réaction de butadiényl ou décabutadiényl lithium avec le chlorure de diéthylaluminium et du chlorure de diéthylaluminium.

Le tableau 1 suivant illustre les résultats obtenus pour la polymérisation du butadiène, laquelle est mise en oeuvre de la manière décrite au § I. ci-dessus.

**Tableau 1 :**

| Exemple n° | n | % cis-1,4 | Rendement (après 60 min. de polymérisation) | Viscosité intrinsèque (dl/g) | Indice Ip |
|---|---|---|---|---|---|
| 3 | 1 | 94 | 90 | 1,5 | 1,8 |
| 4 | 10 | 93 | 95 | 1,4 | 1,7 |

### IV. Exemple 5 :

Cet exemple décrit la polymérisation du butadiène essentiellement en cis-1,4 dans le cyclohexane, au moyen du système catalytique 5 *prémélangé* et de formule :

oligobutadiényle lithié/ chlorure de diéthylaluminium / tris(2-éthyl hexanoate) de néodyme, aux rapports molaires 12/15/1.

Ce cinquième système catalytique se différencie de celui du § I. ci-dessus en ce que le système catalytique est obtenu par prémélangeage des différents constituants et est préparé de la manière suivante :

### 1) Préparation du système catalytique prémélangé 5 selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Pré-mélange des différents constituants du système catalytique et polymérisation :

Dans une bouteille de 50 ml, on a introduit :
- 12,7 ml de toluène,
- un volume de la solution obtenue en a) correspondant à 3 mmoles d'oligobutadiényle lithié,
- 3,75 mmoles de chlorure de diéthyl aluminium, à titre d'agent halogénant, en solution 1 M dans le toluène, et
- 0,25 mmoles de tris(2-éthyl hexanoate) de néodyme en solution 0,19 M dans le toluène.

L'agent d'alkylation et le donneur d'halogène selon l'invention sont ainsi respectivement formés du produit de la réaction de l'oligobutadiényl lithium avec le chlorure de diéthylaluminium et du chlorure de diéthylaluminium.

Dans une bouteille de 150 ml, on a introduit à température ambiante, immédiatement après obtention de la solution de système catalytique :
- 90 ml de cyclohexane,
- 10 g de butadiène, et
- 5 ml de ce système catalytique, soit 5 µmoles de néodyme.

On a ensuite agité la bouteille à 60° C pendant quinze minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 6,0 g de polybutadiène, ce qui témoigne d'un rendement de 60 %. Ce polybutadiène présentait les caractéristiques suivantes :
- viscosité intrinsèque : 1,6 dl/g ;
- masses moléculaires moyennes : Mn = 95 000 g/mol et Mw = 155 000 g/mol,
- indice de polydispersité : Ip = 1,6, et
- taux d'enchaînements cis-1,4 : 93 %.

### V. Exemple 6 :

Cet exemple décrit la polymérisation du butadiène essentiellement en cis-1,4 dans le cyclohexane, au moyen du système catalytique 6 *prémélangé* et de formule :

oligobutadiényle lithié/ bromure de diéthylaluminium / tris(2-éthyl hexanoate) de néodyme, aux rapports molaires 12/15/1.

Ce sixième système catalytique se différencie de celui du § V. ci-dessus en ce que le système catalytique fait intervenir un agent halogénant à base de brome et non pas à base de chlore. Le système catalytique est préparé de la manière suivante :

### 1) Préparation du système catalytique prémélangé 6 selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Pré-mélange des différents constituants du système catalytique et polymérisation :

Dans une bouteille de 50 ml, on a introduit :
- 12,7 ml de toluène,
- un volume de la solution obtenue en a) correspondant à 3 mmoles d'oligobutadiényle lithié,
- 3,75 mmoles de bromure de diéthyl aluminium, à titre d'agent halogénant, en solution 1 M dans le toluène, et
- 0,25 mmoles de tris(2-éthyl hexanoate) de néodyme en solution 0,19 M dans le toluène.

L'agent d'alkylation et le donneur d'halogène selon l'invention sont ainsi respectivement formés du produit de la réaction de l'oligobutadiényl lithium avec le bromure de diéthylaluminium et du bromure de diéthylaluminium.

Dans une bouteille de 150 ml, on a introduit à température ambiante, immédiatement après obtention de la solution de système catalytique :
- 90 ml de cyclohexane,
- 10 g de butadiène, et
- 5 ml de ce système catalytique, soit 5 µmoles de néodyme.

On a ensuite agité la bouteille à 60° C pendant quinze minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 6,8 g de polybutadiène, ce qui témoigne d'un rendement de 68 %. Ce polybutadiène présentait les caractéristiques suivantes :
- viscosité intrinsèque : 2,59 dl/g ;
- masses moléculaires moyennes : Mn = 160 000 g/mol et Mw = 250 000 g/mol,
- indice de polydispersité : Ip = 1,5, et
- taux d'enchaînements cis-1,4 : 97 %.

### VI. Exemple 7 :

Cet exemple décrit la polymérisation du butadiène essentiellement en cis-1,4 dans l'heptane, au moyen d'un système catalytique 7 *préformé* et de formule :

oligobutadiényle lithié/ bromure de diéthylaluminium / tris(2-éthyl hexanoate) de néodyme, aux rapports molaires 12/15/1.

Ce septième système catalytique se différencie de celui du §-I. en ce que le système catalytique est obtenu par préformation et est obtenu de la manière suivante :

### 1) Préparation du système catalytique préformé 7 selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Préparation du catalyseur préformé et polymérisation

Dans une bouteille de 1 litre, on a introduit à la température de 0°C :
- un volume de la solution obtenue en a) correspondant à 3 mmoles d'oligobutadiényle lithié,
- 3,75 mmoles de bromure de diéthyl aluminium, à titre d'agent halogénant, en solution 2,2 M dans le toluène, et
- 0,25 mmoles de tris(2-éthyl hexanoate) de néodyme en solution 0,31 M dans le toluène.

Le système catalytique préformé est obtenu par agitation du mélange ainsi obtenu à la température de 60°C pendant 120 minutes, puis stocké à la température de - 20°C jusqu'à utilisation.

L'agent d'alkylation et le donneur d'halogène selon l'invention sont ainsi respectivement formés du produit de la réaction de l'oligobutadiényl lithium avec le bromure de diéthylaluminium et du bromure de diéthylaluminium.

Dans une bouteille de 250 ml, on a introduit à température ambiante :
- 102 ml d'heptane,
- 10 g de butadiène, et
- un volume de la solution obtenue en 1) b) correspondant à 20 µmoles de néodyme.

On a ensuite agité la bouteille à 60° C pendant trente minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 9,7 g de polybutadiène présentant les caractéristiques suivantes :
- viscosité intrinsèque : 2,44 dl/g ;
- masses moléculaires moyennes : Mn = 130 000 g/mol et Mw = 220 000 g/mol,
- indice de polydispersité : Ip = 1,7, et
- taux d'enchaînements cis-1,4 : 94 %.

### VII. Exemple 8 :

Cet exemple décrit la polymérisation du butadiène essentiellement en 1,4-cis dans l'heptane, au moyen d'un système catalytique 8 *préformé* et de formule :

oligobutadiényle lithié/ bromure de diéthylaluminium / tris(2-éthyl hexanoate) de néodyme, aux rapports molaires 12/15/1.

Ce huitième système catalytique se différencie de celui du §-VII. en ce que le temps de préformation du système catalytique n'est pas le même.

### 1) Préparation du système catalytique 8 préformé selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Préparation du catalyseur préformé

Dans une bouteille de 1 litre, on a introduit à la température de 0°C :
- un volume de la solution obtenue en a) correspondant à 3 mmoles d'oligobutadiényle lithié,
- 3,75 mmoles de bromure de diéthyl aluminium, à titre d'agent halogénant, en solution 2,2 M dans le toluène, et
- 0,25 mmoles de tris(2-éthyl hexanoate) de néodyme en solution 0,31 M dans le toluène.

Le système catalytique préformé est obtenu par agitation du mélange ainsi obtenu à la température de 60°C pendant 15 minutes, puis stocké à la température de - 20°C jusqu'à utilisation.

L'agent d'alkylation et le donneur d'halogène selon l'invention sont ainsi respectivement formés d'un oligobutadiényle aluminium et du bromure de diéthylaluminium.

Dans une bouteille de 250 ml, on a introduit à température ambiante :
- 102 ml d'heptane,
- 10 g de butadiène, et
- un volume de la solution obtenue en 1) b) correspondant à 16 µmoles de néodyme.

On a ensuite agité la bouteille à 60° C pendant trente minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 9,8 g de polybutadiène présentant les caractéristiques suivantes :
- viscosité intrinsèque : 2,88 dl/g ;
- masses moléculaires moyennes : Mn = 130 000 g/mol et Mw = 250 000 g/mol,
- indice de polydispersité : Ip = 1,9, et
- taux d'enchaînements cis-1,4 : 93 %.

### VIII. Exemple 9 :

Cet exemple décrit la polymérisation du butadiène essentiellement en 1,4-cis dans le méthylcyclohexane, au moyen d'un système catalytique 9 *prémélangé* et de formule :

oligobutadiényle lithié/ bromure de diéthylaluminium / tris(2-éthyl hexyl) phosphate de néodyme, aux rapports molaires 6/9/1.

Ce neuvième système catalytique prémélangé se différencie de celui du §-VI. en ce qu'il fait intervenir un sel de néodyme de type tris(phosphate) de néodyme et est préparé de la manière suivante :

### 1) Préparation du système catalytique 9 prémélangé selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Pré-mélange des différents constituants du système catalytique et polymérisation

Dans une bouteille de 50 ml, on a introduit :
- 12,7 ml de méthylcyclohexane,
- un volume de la solution obtenue en a) correspondant à 3 mmoles d'oligobutadiényle lithié,
- 3,75 mmoles de chlorure de diéthyl aluminium, à titre d'agent halogénant, en solution 1,6 M dans le méthylcyclohexane,
puis le contenu de la bouteille est transvasé dans une seconde bouteille de 50 ml contenant 0,5 mmoles de tris(2-éthyl hexyl) phosphate de néodyme sous la forme d'un gel dans le méthylcyclohexane.

L'agent d'alkylation et le donneur d'halogène selon l'invention sont ainsi respectivement formés du produit de la réaction de l'oligobutadiényl lithium avec le bromure de diéthylaluminium et du bromure de diéthylaluminium.

Dans une bouteille de 150 ml, on a introduit à température ambiante, immédiatement après obtention du système catalytique obtenu en 1) b) :
- 90 ml de méthylcyclohexane,
- 10 g de butadiène, et
- un volume de la solution catalytique correspondant à 5 µmoles de néodyme.

On a ensuite agité la bouteille à 60° C pendant quinze minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 9,8 g de polybutadiène, ce qui témoigne d'un rendement de 98 %. Ce polybutadiène présentait les caractéristiques suivantes :
- viscosité intrinsèque : 2,65 dl/g ;
- masses moléculaires moyennes : Mn = 143 000 g/mol et Mw = 190 000 g/mol,
- indice de polydispersité : Ip = 1,4, et
- taux d'enchaînements cis-1,4 : 94 %.

### IX. Exemple 10 :

Cet exemple décrit la polymérisation du butadiène essentiellement en 1,4-cis dans le méthylcyclohexane, au moyen d'un système catalytique 10 *préformé* et de formule :

oligobutadiényle lithié/ bromure de diéthylaluminium / tris(2-éthyl hexyl) phosphate de néodyme, aux rapports molaires 6/9/1.

Ce dixième système catalytique préformé se différencie de celui du §-VII. en ce qu'il fait intervenir un sel de néodyme de type tris(phosphate) de néodyme et est préparé de la manière suivante :

### 1) Préparation du système catalytique préformé 10 selon l'invention :

### a) Préparation du dérivé allylique du lithium :

Dans une bouteille Steinie de 250 ml préalablement lavée et séchée et contenant un barreau aimanté, on a introduit sous agitation :
- 100 ml de toluène,
- 15,4 ml de butadiène, et
- 0,037 moles de butyllithium secondaire.

Après agitation pendant une heure à température ambiante, on a obtenu une solution toluénique d'un oligobutadiényle lithié comprenant 5 unités issues du butadiène.

Afin de déterminer le titre exact de cette solution, on a réalisé un dosage de Gilman et l'on a vérifié, par un dosage « HPLC » du produit de réaction de cette solution et de benzophénone à titre d'agent électrophile, qu'il n'y avait pas de butyllithium secondaire dans la solution de prépolymère lithié obtenue (la quantité résiduelle de butyllithium secondaire devant être inférieure à 0,5 % de la quantité totale de lithium actif).

### b) Préparation du catalyseur préformé

Dans une bouteille de 100 ml, on a introduit à la température de 0°C :
- un volume de la solution obtenue en a) correspondant à 3 mmoles d'oligobutadiényle lithié,
- 3,75 mmoles de bromure de diéthyl aluminium, à titre d'agent halogénant, en solution 1,6 M dans le méthylcyclohexane,
puis le contenu de la bouteille est transvasé dans une seconde bouteille de 50 ml contenant 0,5 mmoles de tris(2-éthyl hexyl) phosphate de néodyme sous la forme d'un gel dans le méthylcyclohexane.

Le système catalytique préformé est obtenu par agitation du mélange ainsi obtenu à la température de 60°C pendant 120 minutes, puis stocké à la température de - 20°C jusqu'à utilisation.

L'agent d'alkylation et le donneur d'halogène selon l'invention sont ainsi respectivement formés du produit de la réaction de l'oligobutadiényl lithium avec le bromure de diéthylaluminium et du bromure de diéthylaluminium.

### 2) Polymérisation du butadiène :

Dans une bouteille de 250 ml, on a introduit à température ambiante :
- 102 ml d'heptane,
- 10 g de butadiène, et
- un volume de la solution obtenue en 1) b) correspondant à 5 µmoles de néodyme.

On a ensuite agité la bouteille à 60° C pendant trente minutes. Puis on a stoppé la polymérisation par l'injection de 1 millilitre de méthanol, et l'on a ajouté au polybutadiène ainsi obtenu 100 mg de 2,6-ditertiobutyle paraéthylphénol à titre d'agent anti-oxydant.

On a récupéré 9,9 g de polybutadiène présentant les caractéristiques suivantes :
- viscosité intrinsèque : 2,7 dl/g ;
- masses moléculaires moyennes : Mn = 136 000 g/mol et Mw = 220 000 g/mol,
- indice de polydispersité : Ip = 1,6, et
- taux d'enchaînements cis-1,4 : 94 %.

Les résultats de ces exemples de polymérisation en discontinu, sans mise en présence préalable d'un composé alkylaluminium avec le butadiène à polymériser, sont reportés dans le tableau n°2 ci-après.

Dans le cas où le système catalytique est formé in situ à partir d'un sel de néodyme de type carboxylate et d'un agent halogénant chloré, la masse molaire du composé oligobutadiènyl lithium s(PB)ₙLi a peu d'effet sur les paramètres de la polymérisation. On constate que lorsque n varie de 1 à 10, les caractéristiques des polymères ne sont pas modifiées. L'indice de polymolécularité reste faible et égal à 1,8. (exemples 1 et 3-4).

Par rapport aux systèmes formés in situ, l'utilisation d'un système prémélangé permet d'atteindre des valeurs de masses molaires plus élevées avec une meilleure activité, tout en conservant un indice de polymolécularité étroit (exemples 5). L'utilisation conjointe d'un agent halogénant bromé plutôt que chloré permet d'augmenter encore la valeur des masses molaires (exemple 6).

Par rapport aux systèmes prémélangés, les systèmes préformés conduisent à des polymères de masses molaires similaires mais la distribution des masses moléculaires est élargie (exemples 7 et 8). Quelque soit le temps de préformation du système catalytique, ce dernier mode de préparation d'un système catalytique selon l'invention n'apporte pas d'amélioration significative par rapport aux systèmes obtenus par prémélangeage.

Ainsi, au cours des ces essais de polymérisations en discontinu, les meilleurs résultats ont été obtenus avec le système catalytique mis en oeuvre par prémélangeage et en présence d'un agent halogénant bromé (exemple 6).

Dans le cas où le système catalytique est préparé à partir d'un sel de néodyme de type phosphate, on constate que les résultats sont meilleurs qu'avec un sel de néodyme de type carboxylate, aussi bien en termes d'activité que de masses molaires et d'indice de polymolécularité. (exemples 9 et 10).

**Tableau 2 : Récapitulatifs des essais de polymérisation en discontinu**

| **POLYMERISATON** | | | | | | **CARACTERISTIQUES DES POLYBUTADIENES OBTENUS** | | | |
|---|---|---|---|---|---|---|---|---|---|
| **Exemple** | **Système catalytique** | **Rapport molaire** | **Mode de réalisation** | **Nd (µMcm)** | **Conversion %** | **Mn (g/mol)** | **IP** | **Viscosité intrinsèque (dl/g)** | **cis-1,4 (%)** |
| 1 | 1 : s(PB)₅Li / CDEA / Nd(Carb.) | 12/15/1 | In situ | 250 | 96 | 68 000 | 1,7 | 1,35 | 93 |
| 2 | 2 : s(PI)₅Li / CDEA / Nd(Carb.) | 12/15/1 | In situ | 1000 | 90 | 51 000 | 1,4 | 0,5 | 94 |
| 3 | 3 : s(PB)₁Li / CDEA / Nd(Carb.) | 12/15/1 | In situ | 250 | 90 | 65 000 | 1,8 | 1,5 | 94 |
| 4 | 4 : s(PB)₁₀Li / CDEA / Nd(Carb.) | 12/15/1 | In situ | 250 | 95 | 69 000 | 1,7 | 1,4 | 93 |
| 5 | 5 : s(PB)₅Li / CDEA / Nd(Carb.) | 12/15/1 | Prémélangeage | 50 | 60 | 95 000 | 1,6 | 1,6 | 93 |
| 6 | 6 : s(PB)₅Li / BDEA / Nd(Carb.) | 12/15/1 | Prémélangeage | 50 | 68 | 160 000 | 1,5 | 2,59 | 97 |
| 7 | 7 : s(PB)₅Li / BDEA / Nd(Carb.) | 12/15/1 | Préformation 120 min. à 60°C | 200 | 97 | 130 000 | 1,7 | 2,44 | 94 |
| 8 | 8 : s(PB)₅Li / BDEA / Nd(Carb.) | 12/15/1 | Préformation 15 min. à 60°C | 160 | 98 | 130 000 | 1,9 | 2,88 | 93 |
| 9 | 9 : s(PB)₅Li / BDEA / Nd(Phosp.) | 6/9/1 | Prémélangeage | 50 | 98 | 143 000 | 1,4 | 2,65 | 94 |
| 10 | 10 : s(PB)5Li / BDEA / Nd(Phosp.) | 6/9/1 | Préformation | 50 | 99 | 136 000 | 1,6 | 2,70 | 94 |

Dans le tableau, la notation s(PB)ₙLi (s(PI)ₙLi) représente le composé oligobutadiènyl lithium comportant n unités issues du butadiène (respectivement isoprène), CDEA (BDEA) représente le chlorure (respectivement le bromure) de diéthylaluminium, Nd(Carb.) représente le tris(2-éthyl hexanoate) de néodyme, Nd(Phosp.) représente le tris-[bis-(2-éthyl-hexyl)phosphate] de néodyme.

### B. Exemples de polymérisation en continu du butadiène au moyen de systèmes catalytiques prémélangés selon l'invention, sans mise en contact préalable d'un composé alkylaluminium avec le butadiène à polymériser

### I. Mode opératoire suivi pour les diverses polymérisations :

Chaque polymérisation a été réalisée dans ces exemples sur une ligne continue à deux réacteurs en série R1 et R2 identiques, de volume égal à 32,5 L et équipés d'un système d'agitation mécanique via des pales.

La solution du dérivé allylique de lithium dans le toluène et l'agent halogénant ont été injectés en entrée de ligne dans un mélangeur dynamique (temps de contact 1 à 5 minutes), puis le sel de néodyme a été additionné à la sortie de ce mélangeur dynamique. La solution catalytique a ensuite été prémélangée à l'aide d'un ou plusieurs mélangeurs statiques pendant un temps de contact compris entre 3 et 30 minutes. Le catalyseur ainsi préparé a été injecté directement dans le premier réacteur R1, dans le flux de la solution de butadiène à polymériser dissout dans le solvant de polymérisation (cyclohexane).

Les temps de séjour par réacteur ont été fixés entre 15 et 30 minutes et la température est maintenue à 60°C.

Le stoppeur et l'antioxydant utilisés étaient les mêmes qu'au §. A. ci-dessus, et ils ont été injectés l'un après l'autre en sortie des réacteurs, en amont de mélangeurs statiques.

La quantité de néodyme dans chaque système catalytique est exprimée en µmol pour 100 g de monomère butadiène (quantité exprimée en µMcm ci-après).

Ainsi, les catalyseurs prémélangés selon l'invention ont été testés. (cf. Tableau 3 et 4)

### II. Essais de polymérisation effectués au moyen des systèmes catalytiques :

### 1) Essais A à F selon l'invention mis en oeuvre via ledit système catalytique prémélangé, ledit agent halogénant étant le chlorure de diéthylaluminium (CDEA ci-après en abrégé) :

Les résultats du tableau 3 illustrent le comportement de systèmes catalytiques prémélangés selon l'invention lorsque l'agent halogénant est à base de chlore.

Il est à noter que le temps de prémélangeage ainsi que le temps de séjour ont peu d'effet sur le taux d'unités 1,4-cis présentes dans le polymère. Le taux d'unités 1,4-cis est sensiblement le même quelques soient les conditions et est compris entre 94 et 96%.

L'indice de polymolécularité est globalement faible, compris entre 1,4 et 1,9. Il est à noter que la valeur minimale de l'indice de polymolécularité a été obtenue pour le temps de prémélangeage le plus long (30 minutes) et le temps de séjour le plus court (45 minutes).

Par ailleurs, il est à noter que le taux de conversion en monomère est d'autant plus important que le temps de prémélangeage est long. En faisant varier conjointement le temps de séjour, il est possible de moduler les caractéristiques du polymère synthétisé, en termes de :
- masses molaires,
- indice de polymolécularité,
- viscosité intrinsèque,
- viscosité Mooney.

Par exemple, un bon compromis Mn / IP est obtenu pour un temps de séjour de 45 minutes et un temps de prémélangeage de 30 minutes (essai F).

**Tableau 3 :**

| **POLYMERISATION** | | | | | | | | **CARACTERISTIQUES DES POLYBUTADIENES OBTENUS** | | | | | | |
|---|---|---|---|---|---|---|---|---|---|---|---|---|---|---|
| **Essai** | **Système Catalytique sPB₅Li / CDEA / Nd** | **Nd (µMcm)** | **Temps de prémélangeage** | **S / M** | **Temps de séjour total (R1 + R2)** | **CR1 %** | **CR2 %** | **ML** | **Viscosité intrinsèque dl/g** | **cis-1,4 (%)** | **trans-1,4 (%)** | **1,2 (%)** | **Mn (g/mol)** | **Ip** |
| **A** | 12 / 16 / 1 | 30 | 5 | 5 | 60 | 30 | 38 | - | 1,3 | 94 | 5 | 1 | 74 000 | 1,7 |
| **B** | 12 / 16 / 1 | 30 | 5 | 5 | 45 | 25 | 31 | - | 0,9 | 94 | 5 | 1 | 63 000 | 1,8 |
| **C** | 12 / 16 / 1 | 30 | 15 | 5 | 60 | 39 | 45 | 45 | 1,9 | 95 | 3 | 1 | 105 000 | 1,9 |
| **D** | 12 / 16 / 1 | 30 | 15 | 5 | 45 | 31 | 36 | 45 | 1,4 | 96 | 3 | 1 | 92 000 | 1,8 |
| **E** | 12 / 16 / 1 | 30 | 30 | 5 | 60 | 49 | 54 | 50 | 2,1 | 95 | 4 | 1 | 125 000 | 1,8 |
| **F** | 12 / 16 / 1 | 30 | 30 | 5 | 45 | 30 | 41 | 45 | 1,8 | 94 | 5 | 1 | 103 000 | 1,5 |

sPB₅Li désigne le dérivé allylique lithié (oligobutadiényle lithium comprenant 5 unités issues du butadiène), Nd représente le tris(2-éthyl hexanoate) de néodyme, S/M représente le rapport solvant sur monomère introduits en entrée de ligne, CR1 et CR2 sont les conversions en monomère à la sortie des réacteurs R1 et R2 respectivement.

### 2) Essais G à L selon l'invention mis en oeuvre via ledit système catalytique prémélangé, ledit agent halogénant étant le bromure de diéthylaluminium (BDEA ci-après en abrégé) :

Les résultats du tableau 4 illustrent le comportement des systèmes catalytiques prémélangés selon l'invention, lorsque l'agent halogénant est à base de brome.

Il est à noter que le temps de prémélangeage, le temps de séjour ou la quantité de néodyme introduite ont peu d'effet sur le taux d'unités 1,4-cis présentes dans le polymère. Le taux d'unités 1,4-cis est sensiblement le même quelque soient les conditions et est compris entre 96 et 98%.

L'indice de polymolécularité est globalement faible, compris entre 1,8 et 2,1. Il est à noter que la valeur minimale de l'indice de polymolécularité a été obtenue pour le temps de prémélangeage le plus long (30 minutes) et le temps de séjour le plus court (45 minutes).

La comparaison de ces résultats avec ceux de la partie B.II.1) précédente montre que la nature de l'agent halogénant a un effet sur les caractéristiques du polymère synthétisé (essais C et G). L'agent halogénant à base de brome conduit à des indices de polymolécularité plus élevé.

Par ailleurs, il est à noter q'une augmentation de la quantité de sel de néodyme introduite dans le milieu de polymérisation conduit logiquement à des taux de conversion en monomères plus élevés (essais J à L). Comme précédemment, en faisant varier le temps de prémélangeage et/ou le temps de séjour, il est possible de moduler les caractéristiques des polymères synthétisés, en termes de :
- masses molaires,
- indice de polymolécularité,
- viscosité intrinsèque,
- viscosité Mooney.

Par exemple, un bon compromis Mn / IP est obtenu pour un temps de séjour de 45 minutes et un temps de prémélangeage de 30 minutes (essai L)

**Tableau 4 :**

| **POLYMERISATION** | | | | | | | | **CARACTERISTIQUES DES POLYBUTADIENES OBTENUS** | | | | | | |
|---|---|---|---|---|---|---|---|---|---|---|---|---|---|---|
| **Essai** | **Système Catalytique sPB₅Li/ BDEA /Nd** | **Nd (µMcm)** | **Temps de prémélangeage** | **Rapport S/M** | **Temps de séjour total (R1 + R2)** | **CR1 %** | **CR2 %** | **ML** | **Viscosité intrinsèque dl/g** | **cis-1,4 (%)** | **trans-1,4 (%)** | **1,2 (%)** | **Mn (g/mol)** | **Ip** |
| **G** | 12 / 16 / 1 | 30 | 15 | 5 | 60 | 50 | 58 | 45 | 2,35 | 98 | 1 | 1 | 109 000 | 2,1 |
| **H** | 12 / 16 / 1 | 35 | 15 | 5 | 60 | 59 | 66 | 50 | 2,2 | 97 | 2 | 1 | 115 000 | 2,0 |
| **I** | 12 / 16 / 1 | 40 | 15 | 5 | 60 | 60 | 64 | 45 | 2,15 | 98 | 1 | 1 | 116 000 | 2,0 |
| **J** | 12 / 16 / 1 | 50 | 15 | 5 | 60 | 85 | 90 | 65 | 2,6 | 98 | 1 | 1 | 133 000 | 2,1 |
| **K** | 12 / 16 / 1 | 50 | 15 | 5 | 45 | 71 | 74 | 50 | 2,4 | 96 | 3 | 1 | 114 000 | 2,0 |
| **L** | 12 / 16 / 1 | 50 | 30 | 5 | 45 | 74 | 79 | 55 | 2,4 | 98 | 1 | 1 | 117 000 | 1,8 |

sPB₅Li désigne le dérivé allylique lithié (oligobutadiényle lithium comprenant 5 unités issues du butadiène), S/M représente le rapport solvant sur monomère introduits en entrée de ligne et CR1 et CR2 sont les conversions en monomère à la sortie des réacteurs R1 et R2 respectivement.

### ANNEXE 1 : Détermination de la microstructure des polybutadiènes obtenus.

On a utilisé la technique de dosage appelée « proche infrarouge » (NIR). Il s'agit d'une méthode indirecte faisant appel à des élastomères « témoin » dont la microstructure a été mesurée par la technique de RMN¹³C. On utilise la relation quantitative (loi de Beer-Lambert) existant entre la répartition des monomères dans un élastomère et la forme du spectre NIR de celui-ci. Cette technique est mise en oeuvre en deux étapes :
1) Etalonnage :
   - On procède à l'acquisition des spectres respectifs des élastomères « témoin ».
   - On établit un modèle mathématique associant une microstructure à un spectre donné, ceci à l'aide de la méthode de régression PLS (Partial Least Squares) reposant sur une analyse factorielle des données spectrales. Les deux documents suivants traitent d'une manière approfondie de la théorie et de la mise en oeuvre de cette méthode d'analyse de données « multi-variées » :
      (1) P. GELADI et B. R. KOWALSKI « Partial Least Squares regression : a tutorial », Analytica Chimica Acta, vol. 185, 1-17 (1986).
      (2) M. TENENHAUS « La régression PLS - Théorie et pratique » Paris, Editions Technip (1998).
2) Mesure :
   - On procède à un enregistrement du spectre de l'échantillon.
   - On réalise le calcul de la microstructure.

### ANNEXE 2 :

### Détermination de la distribution des masses moléculaires des polybutadiènes obtenus par la technique de chromatographie d'exclusion par la taille (SEC).

### a) Principe de la mesure:

La chromatographie d'exclusion par la taille ou SEC (size exclusion chromatography) permet de séparer physiquement les macromolécules suivant leur taille à l'état gonflé sur des colonnes remplies de phase stationnaire poreuse. Les macromolécules sont séparées par leur volume hydrodynamique, les plus volumineuses étant éluées en premier.

Sans être une méthode absolue, la SEC permet d'appréhender la distribution des masses moléculaires d'un polymère. A partir de produits étalons commerciaux, les différentes masses moyennes en nombre (Mn) et en poids (Mw) peuvent être déterminées et l'indice de polydispersité calculé (Ip = Mw/Mn).

### b) Préparation du polymère:

Il n'y a pas de traitement particulier de l'échantillon de polymère avant analyse. Celui-ci est simplement solubilisé dans du tétrahydrofuranne à une concentration d'environ 1 g/l.

### c) Analyse SEC:

Cas c1) L'appareillage utilisé est un chromatographe « WATERS alliance ». Le solvant d'élution est le tétrahydrofuranne, le débit de 1 ml/min., la température du système de 35° C et la durée d'analyse de 90 min. On utilise un jeu de deux colonnes de dénomination commerciale « STYRAGEL HT6E ».

Le volume injecté de la solution de l'échantillon de polymère est 100 µl. Le détecteur est un réfractomètre différentiel « WATERS 2140» et le logiciel d'exploitation des données chromatographiques est le système « WATERS MILLENIUM ».

Cas c2) L'appareillage utilisé est un chromatographe « WATERS, modèle 150C ». Le solvant d'élution est le tétrahydrofuranne, le débit de 0,7 ml/mn, la température du système de 35°C et la durée d'analyse de 90 min. On utilise un jeu de quatre colonnes en série, de dénominations commerciales « SHODEX KS807 », « WATERS type STYRAGEL HMW7 » et deux « WATERS STYRAGEL HMW6E ».

Le volume injecté de la solution de l'échantillon de polymère est 100 µl. Le détecteur est un réfractomètre différentiel « WATERS modèle RI32X » et le logiciel d'exploitation des données chromatographiques est le système « WATERS MILLENIUM » (version 3.00).

## Revendications

1. Procédé de préparation d'un élastomère diénique présentant un taux d'enchaînements cis-1,4 supérieur à 90 % et un indice de polydispersité égal ou inférieur à 2,1, tel qu'un homopolymère ou un copolymère du butadiène, comprenant une réaction en continu ou en discontinu d'un système catalytique avec au moins un monomère diène conjugué à polymériser, **caractérisé en ce que** ledit système catalytique est à base d'au moins :
- optionnellement un diène conjugué de préformation,
- un sel d'un ou plusieurs métaux de terre(s) rare(s), tel qu'un sel d'un acide carboxylique ou d'un acide phosphorique organique,
- un solvant hydrocarboné inerte,
- un agent d'alkylation comprenant un dérivé allylique de l'aluminium de formule R"ₙAlR'₃₋ₙ, où R' est un groupe alkyle saturé ou non ou bien un hydrure, où R" est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

2. Procédé selon la revendication 1, **caractérisé en ce que** ledit procédé comprend une mise en présence en décalé par rapport aux constituants du système catalytique utilisé pour la réaction de polymérisation en continu ou en discontinu du ou des monomère(s) à polymériser avec au moins un composé alkylaluminium de formule AlR₃ ou HAlR₂ ou R"ₙAlR'₃₋ₙ, où R est un groupe alkyle et H un atome d'hydrogène, R' et R" comme définis ci-dessus, choisie en fonction des caractéristiques du milieu de polymérisation et/ou des conditions de polymérisation et/ou dudit élastomère à obtenir, et **en ce que** ledit système catalytique est à base d'au moins :
- optionnellement un diène conjugué de préformation,
- un sel d'un ou plusieurs métaux de terre(s) rare(s), tel qu'un sel d'un acide carboxylique ou d'un acide phosphorique organique,
- un solvant hydrocarboné inerte,
- un agent d'alkylation comprenant un dérivé allylique de l'aluminium de formule R"ₙAlR'₃₋ₙ, où R' est un groupe alkyle saturé ou non ou bien un hydrure, où R" est un groupe allylique et où n est un entier inclusivement compris entre 1 et 3, et
- un donneur d'halogène qui appartient à la famille des halogénures d'alkylaluminium, à l'exclusion des sesquihalogénures d'alkylaluminium.

3. Procédé selon l'une des revendications 1 ou 2, **caractérisé en ce que** ledit composé d'alkylaluminium de formule AlR₃ ou HAlR₂ ou R"ₙAlR'₃₋ₙ, est ajouté antérieurement à la réaction de polymérisation en une quantité prédéterminée, choisie en fonction des caractéristiques du milieu de polymérisation et/ou des conditions de polymérisation et/ou dudit élastomère à obtenir.

4. Procédé selon l'une des revendications 1 à 3, **caractérisé en ce que** ledit groupe allylique contenu dans ledit dérivé allylique de l'aluminium est choisi dans le groupe constitué par les dérivés butadiényle, isoprényle, oligobutadiényle et oligoisoprényle.

5. Procédé selon l'une des revendications 1 à 4, **caractérisé en ce que** ledit dérivé allylique de l'aluminium comprend le produit de la réaction d'un dérivé allylique du lithium de formule R"Li et d'un agent halogénant de formule XₙAlR'₃₋ₙ, où X est un halogène et où R', R" et n sont tels que définis ci-dessus.

6. Procédé selon la revendication 5, **caractérisé en ce que** ledit dérivé allylique du lithium est un oligobutadiényle lithium ou un oligoisoprényle lithium.

7. Procédé selon la revendication 5 ou 6, **caractérisé en ce que** ledit donneur d'halogène correspond audit agent halogénant de formule XₙAlR'₃₋ₙ utilisé en excès, lequel a réagi en partie seulement avec ledit dérivé allylique du lithium pour l'obtention dudit dérivé allylique de l'aluminium.

8. Procédé selon une des revendications 4 à 7, **caractérisé en ce que** ledit agent halogénant est à base de brome.

9. Procédé selon la revendication 8, **caractérisé en ce que** ledit agent halogénant est un monobromure d'alkylaluminium, tel que le bromure de diéthylaluminium.

10. Procédé selon une des revendications 5 à 7, **caractérisé en ce que** ledit agent halogénant est à base de chlore.

11. Procédé selon la revendication 10, **caractérisé en ce que** ledit agent halogénant est un monochlorure d'alkylaluminium, tel que le chlorure de diéthylaluminium.

12. Procédé selon une des revendications 5 à 11, **caractérisé en ce que** ledit système catalytique est obtenu en prémélangeant directement ledit solvant, ledit dérivé allylique du lithium, ledit agent halogénant présent en excès pour l'obtention dudit agent d'alkylation ainsi que dudit donneur d'halogène et ledit sel.

13. Procédé selon une des revendications 5 à 11, **caractérisé en ce que** ledit système catalytique est obtenu par réaction in situ dans le solvant du dérivé allylique du lithium, de l'agent halogénant, du sel de terre(s) rare(s).

14. Procédé selon une des revendications 5 à 11, **caractérisé en ce que** ledit système catalytique est obtenu par préformation dans le solvant du dérivé allylique du lithium, de l'agent halogénant, du sel de terre(s) rare(s).

15. Procédé selon une des revendications précédentes, **caractérisé en ce que** le rapport molaire (agent d'alkylation / sel de terre(s) rare(s)) dans ledit système catalytique présente une valeur allant de 1 à 20.

16. Procédé selon la revendication 15, **caractérisé en ce que** le rapport molaire donneur d'halogène / sel de terre(s) rare(s) dans ledit système catalytique présente une valeur allant de 2 à 3,5.

17. Procédé selon l'une des revendications 2 à 16, **caractérisé en ce que** la quantité dudit composé alkylaluminium de formule AlR₃ ou HAlR₂ ou R"ₙAlR'₃₋ₙ, ajoutée en décalé et mise en présence avec le(s)dit(s) monomère(s) à polymériser varie de 10 à 5000 micromoles pour 100 g de monomère diène conjugué à polymériser, notamment en fonction des caractéristiques de macrostructure visées pour ledit élastomère et/ou de la quantité d'impuretés présentes dans le milieu de polymérisation, telles que des impuretés provenant de solvants de recyclage.

18. Procédé selon une des revendications précédentes 2 à 17, **caractérisé en ce que** l'on met en oeuvre ladite réaction de polymérisation en continu, ledit composé alkylaluminium étant introduit en une entrée de ligne située en amont d'au moins un réacteur de polymérisation, puis le sel de terre(s) rare(s) en amont d'au moins un réacteur de polymérisation dans lequel ou lesquels est (sont) introduit(s) le(s) monomère(s) à polymériser.

19. Procédé selon une des revendications précédentes 2 à 18, **caractérisé en ce que** le dérivé allylique de l'alkylaluminium, synthétisé à partir du dérivé allylique du lithium et de l'agent halogénant, est introduit en entrée de ligne à l'aide d'un mélangeur dynamique de type parfaitement agité et le sel de terre(s) rare(s) est introduit en entrée de ligne à l'aide d'un mélangeur disposant d'une agitation de type statique.

20. Procédé selon une des revendications précédentes 2 à 19, **caractérisé en ce que** l'on met en oeuvre ladite réaction dans un solvant de polymérisation hydrocarboné inerte ou bien en masse.

21. Procédé selon une des revendications précédentes 2 à 20, **caractérisé en ce que** ledit composé alkylaluminium est l'hydrure de diisobutylaluminium.

22. Procédé selon une des revendications précédentes 2 à 21, **caractérisé en ce que** ledit sel est un tris[bis(2-éthylhexyl)phosphate] de terre(s) rare(s), tel que le tris[bis(2-éthylhexyl)phosphate] de néodyme.

23. Procédé selon une des revendications précédentes 2 à 22, **caractérisé en ce que** ledit monomère diène conjugué est le butadiène, pour l'obtention d'un homopolymère du butadiène présentant à la fois une viscosité Mooney ML(1+4) à 100° C, mesurée selon la norme ASTM D 1646, qui est égale ou supérieure à 40, un indice de polydispersité égal ou inférieur à 2,1, et un taux d'enchaînements cis-1,4 supérieur à 90 %.
